# EUROPÄISCHE PATENTSCHRIFT

(11) **EP 0 543 173 B1**
(45) Veröffentlichungstag und Bekanntmachung des Hinweises auf die Patenterteilung: **23.08.1995**
(21) Anmeldenummer: 92118132.7
(22) Anmeldetag: 23.10.1992
(51) Int. Cl.: H02G 15/076, H02G 15/013

(54) **Vorrichtung zum Verbinden und Abzweigen von Installationskabeln, insbesondere Endverzweiger, Verbindungsdose oder Verteilungsdose für Fernmeldekabel**
Device for connecting and branching installation cables, particularly distributor, connecting box or distribution box for telecommunication cables
Dispositif de connexion et de branchement de câbles d'installation, en particulier distributeur, boîte de jonction ou boîte de distribution pour câbles de télécommunication

(30) Priorität: 19.11.1991 DE 4138127
(43) Veröffentlichungstag der Anmeldung: 26.05.1993
(73) Patentinhaber: Stewing Nachrichtentechnik GmbH & Co. KG Berlin, 13599 Berlin (DE)
(72) Erfinder: Ostermann, Bernd, Dipl.-Ing., W-1000 Berlin 15 (DE)
(74) Vertreter: Honke, Manfred, Dr.-Ing.

(56) Entgegenhaltungen:
- EP-A- 0 071 737
- DE-A- 2 228 498
- DE-A- 2 645 143
- DE-A- 3 428 258
- GB-A- 2 079 831

## Beschreibung

Die Erfindung betrifft eine Vorrichtung zum Verbinden und Abzweigen von Istallationskabeln, insbesondere Endverzweiger, Verbindungsdose oder Verteilungsdose für Fernmeldekabel, mit einem Gehäuse aus Gehäuseunterteil und Abdeckhaube, mit im Bodenbereich des Gehäuseunterteils angeordneten Kabeleinführungen für ankommende und abgehende Kabel, mit zumindest einer Anschlußleiste für Kabeladern der Kabel, einer Erdungseinrichtung, einer Zugentlastung und gegebenenfalls einem Überspannungsableitermagazin. - Bei der Anschlußleiste handelt es sich im Rahmen der Erfindung bevorzugt um eine Leiste zum löt-, schraub- und abisolierfreien Anschließen von kunststoffisolierten Kabeladern bzw. Drähten, die auch als Schneid-Klemm-Anschlußleiste bezeichnet wird. Bei den ankommenden Kabeln handelt es sich regelmäßig um netzseitige Kabel, bei den abgehenden Kabeln dagegen um teilnehmerseitige Kabel.

Es sind Endverzweiger der eingangs beschriebenen Ausführungsform bekannt (siehe DE-A-2228498 und EP-A-0071737), bei welchen die Abdeckhaube auf das Gehäuseunterteil aufgeschoben ist und die Kabeleinführungen als Einführungsstopfen ausgebildet sind. Derartige Einführungsstopfen sollen sich durch ihre Bauform den einzuführenden Kabeln anpassen, sind jedoch insofern problematisch, als die ankommenden Kabel von unten eingesteckt werden müssen. Das stört in installationstechnischer Hinsicht. Letzteres gilt auch unter Berücksichtigung der Tatsache, daß die Anschlußleiste bzw. Anschlußleisten bei den bekannten Ausführungsformen in Kabeleinführungsrichtung und folglich vertikal angeordnet sind und sich das Überspannungsableitermagazin im mittleren Gehäusebereich bzw. zwischen den Anschlußleisten befindet. Schließlich verkantet häufig auch die auf das Gehäuseunterteil aufschiebbare Abdeckhaube. Um eine hinreichende Führung für die aufschiebbare Abdeckhaube zu erreichen, muß das Gehäuseunterteil verhältnismäßig hochwandig ausgebildet sein.

Der Erfindung liegt die Aufgabe zugrunde, eine Vorrichtung zum Verbinden und Abzweigen von Installationskabeln, insbesondere einen Endverzweiger, eine Verbindungsdose oder Verteilungsdose für Fernmeldekabel, der eingangs beschriebenen Ausführungsform zu schaffen, die sich unter Berücksichtigung einer kompakten Bauweise durch vereinfachte Einführungstechnik und erhöhte Anpassungsfähigkeit in bezug auf die anzuschließenden Kabel bzw. ihre Kabeladern auszeichnet.

Diese Aufgabe löst die Erfindung bei einer gattungsgemäßen Verbinde- und Abzweigungsvorrichtung dadurch, daß die Kabeleinführungen für zumindest die ankommenden Kabel jeweils zwei zum Einlegen eines Kabels aufklappbare Dicht/Klemmbacken mit in Kabellängsrichtung hineinander angeordneten Dichtungshälften und Klemmen aufweisen, und daß die beiden zusammengeklappten Dicht /Klemmbacken unter Bildung einer Dicht /Klemmeinheit mit zumindest einer Dichtung und einer Klemme für das betreffende Kabel in eine Halterung am Gehäuseunterteil von vorne einsteckbar sind. - Diese Maßnahmen der Erfindung haben zur Folge, daß auf den Einsatz von sonst üblichen Einführungsstopfen, welche von unten durchstoßen werden müssen, verzichtet wird, sich vielmehr die ankommenden Kabel unschwer zwischen den aufgeklappten Dicht/Klemmbacken einlegen und durch das Zusammenklappen dieser Dicht/Klemmbacken aufgrund der Dichtungshälften einwandfrei abdichten und aufgrund der Klemmhälften unter Zugentlastung einwandfrei fixieren lassen. Dicht- und Klemmwirkung werden durch das Zusammenklappen der Dicht/Klemmbacken unter Bildung einer Dicht/Klemmeinheit erreicht, welche nach dem Einstecken in die zugeordnete Halterung als solche erhalten bleibt. Insoweit wird die Kabeleinführungstechnik erheblich vereinfacht. Im Rahmen der Erfindung kann jede Dicht/Klemmeinheit mehrere in Kabellängsrichtung hintereinander angeordnete Dichtungen und Klemmen für Kabel unterschiedlicher Durchmesser aufweisen. In diesem Zusammenhang empfiehlt die Erfindung, daß die Dichtungen als Ringdichtungen mit abgestuften Innendurchmessern ausgebildet sind und die Klemmen Kabeldurchtrittsspalte mit abgestuften Spaltbreiten bilden. Weiter lehrt die Erfindung, daß sich die Klemmen an lediglich einer der beiden Dicht/Klemmbacken befinden und jeweils einen auf der Seite der anderen Dicht /Klemmbacke offenen Kabeldurchtrittsspalt mit einer beim seitlichen Eindrücken des betreffenden Kabels überfahrbaren Arretierungsnase aufweisen. Soweit erforderlich lassen sich die Dichtungen und Klemmen auf das jeweilige Kabelmaß schneiden, wenn beispielsweise der Innendurchmesser in bezug auf den Kabeldurchmesser zu klein und der Kabeldurchtrittsspalt zu schmal ist. Vorzugsweise weisen die Dichtungen und die Klemmen einen schneidenartigen Querschnitt auf, wobei die Dichtungen aus biegeweichem Material und die Klemmen aus biegesteifem Material, bevorzugt Kunststoff bestehen. Der schneidenartige Querschnitt gewährleistet eine besonders einwandfreie Dicht- und Klemmwirkung, weil sich die Dichtungen eng an das betreffende Kabel anlegen können, während sich die Klemmen hinreichend in die Kabelisolierung eindrücken, um eine einwandfreie Kabelfixierung zu erreichen. - Weiter sieht die Erfindung vor, daß die aufklappbaren Dicht/Klemmbacken hälftige Kabeldurchtrittsöffnungen mit geschlitzten Dichthäuten zum Einlegen von abgehenden Kabeln aufweisen, die regelmäßig einen geringeren Durchmesser als die ankommenden Kabel aufweisen. Erfindungsgemäß sind jeweils die beiden Dicht /Klemmbacken über ein Filmscharnier miteinander verbunden und weisen ineinandergreifende Zentrierzapfen und -bohrungen auf, so daß im Zuge des Zusammenklappens mit eingelegtem Kabel ein Dicht/Klemmeinheit entsteht, welche einwandfreie Dichtwirkung und Kabelabfangung gewährleistet, weil sich die Dichthälften und Klemmhälften ausgerichtet gegenüberliegen und tatsächlich nach dem Zusammenklappen der Dicht/Klemmbacken einwandfreie Dichtungen und Klemmen bilden.

Das Gehäuseunterteil weist eine Mehrzahl von Halterungen für die Dicht/Klemmeinheiten auf. Nach bevorzugter Ausführungsform weisen die Halterungen für die Dicht/Klemmeinheiten fachbildende Einsteckleisten am Gehäuseunterteil auf und sind die Dicht/Klemmeinheiten zwischen den Einsteckleisten in die Fächer einsteckbar und bilden mit den jeweils beidseitigen Einsteckleisten Nut/Federverbindungen. Dabei ist es gleichgültig, ob die Dicht /Klemmeinheiten beidseitig Nuten und die Einsteckleisten die eingreifenden Federn aufweisen oder umgekehrt. Den Fächern sind Arretierungsstege mit eine Schulter an den Dicht/Klemmeinheiten rastsitzartig übergreifenden Arretierungshaken zugeordnet. Beim Einstecken in die Fächer überfahren die Dicht/Klemmeinheiten mit ihrer Schulter die Arretierungshaken, die anschließend diese Schulter übergreifen und folglich für eine einwandfreie Fixierung der Dicht/Klemmeinheiten in den Halterungen sorgen.

Weiter lehrt die Erfindung, daß die Anschlußleiste und gegebenenfalls das Überspannungsableitermagazin quer zur Kabeleinführungsrichtung angeordnet und in Modulbauweise aus Blöcken wahlweise zusammensetzbar sind, Diese Queranordnung ermöglicht einen in manipulationstechnischer Hinsicht vereinfachten Anschluß der Kabeladern. Die Modulbauweise gewährleistet eine erhöhte Anpassungsfähigkeit an den Verbindungs- und/oder Abzweigungsbedarf. Das gilt auch in bezug auf die Übersapnnungsableiter. Das Überspannungsableitermagazin kann in einfacher Weise an die Anschlußleiste anreihbar sein. Erfindungsgemäß läßt sich die Anschlußleiste aus Blöcken unschwer so zusammensetzen, daß z. B. eine geteilte Anschlußleiste oder zwei Anschlußleisten mit einer mittigen Kabeladerdurchführung entstehen. Alternativ zu den Dicht/Klemmeinheiten sind zwischen den Kabeleinführungen und der Anschlußleiste Kabelklemmen - nach Art von Tauklampen - als Zugentlastung für die ankommenden Kabel angeordnet, z. B. einstückig im Gehäuse angespritzt. Insoweit wird praktisch eine zusätzliche Zugentlastung erreicht. Unterhalb der Kabelklemmen können gegeneinander wirkende Dichtungsplatten aus dauerelastischer Dichtmasse an einerseits dem Gehäuseunterteil und anderseits der Abdeckhaube vorgesehen sein. Die dauerplastische Dichtmasse gewährleistet eine innige Umfassung der hindurchgeführten Kabel und folglich eine gute Dichtwirkung.

Weiter sieht die Erfindung vor, daß die Abdeckhaube auf der den Kabeleinführungen gegenüberliegenden Seite an dem Gehäuseunterteil schwenkbar gelagert ist, so daß sie einerseits zu Installationszwecken lediglich hochgeschwenkt werden muß, andererseits die Ausbildung eines Gehäuseunterteils mit einem verhältnismäßig niedrigen Rand ermöglicht, so daß eine kompakte bzw. flache Bauweise erreicht wird. Die Schwenklager für die Abdeckhaube und folglich zwischen dem Gehäuseunterteil und der Abdeckhaube sind vorzugsweise als Rastlager - Lagerzapfen und Zapfenaufnahme - ausgebildet, wobei das Gehäuseunterteil rückwandseitig im Bereich der Rastlager auseinanderspreizbare bzw. zusammendrückbare Faltenwandabschnitte aus dem Gehäusematerial jedoch nach Art eines Faltenbalges aufweist. Diese Maßnahmen empfehlen sich, weil die Abdeckhaube verhältnismäßig biegesteif ist, und folglich der Rastlagerteil an dem Gehäuseunterteil nachgeben können muß, wenn die Abdeckhaube zur Bildung der Schwenklager aufgerastet wird. Zweckmäßigerweise übergreift die Abdeckhaube das Gehäuseunterteil, wobei das Gehäuseunterteil im übergriffenen Bereich eine mit der Abdeckhaube zusammenwirkende Dichtung, z. B. außenliegende Lippendichtung aufweist. Dadurch wird einwandfreie Dichtwirkung auch zwischen der Abdeckhaube und dem Gehäuseunterteil erreicht. Die Abdeckhaube kann einen mittigen mit dem Gehäuseunterteil zusammenwirkenden Rastverschluß aufweisen, wird also in Schließstellung einwandfrei auf dem Gehäuseunterteil gehalten. Weiter empfiehlt es sich, die Abdeckhaube mit einem Schloß auszurüsten. Dazu weist die Abdeckhaube auf ihrer Vorderseite von innen her eine Schloßaufnahme für ein mit dem Gehäuseunterteil zusammenwirkendes Schloß auf. Das Schlüsselloch in der Abdeckhaube ist durch eine herausbrechbare dünne Wand verschlossen und weist an seiner außenseite oberhalb und seitlich des Schlüsselloches eine Tropfkante auf. Endlich kann das Gehäuse rückseitig Montagehaken besitzen, um eine Befestigung mittels Spannbänder selbst an einem Mast zu ermöglichen. Das Gehäuse, folglich Gehäuseunterteil und Abdeckhaube, bestehen in bekannter Weise aus Kunststoff.

Im folgenden wird die Erfindung anhand einer lediglich ein Ausführungsbeispiel darstellenden Zeichnung näher erläutert; es zeigen:
- Fig.: 1 eine erfindungsgemäße Verbindungs- und Abzweigvorrichtung in Frontansicht bei hochgeklappter Abdeckhaube mit andeutungsweise einem ankommenden Kabel und zwei abgehenden Kabeln,

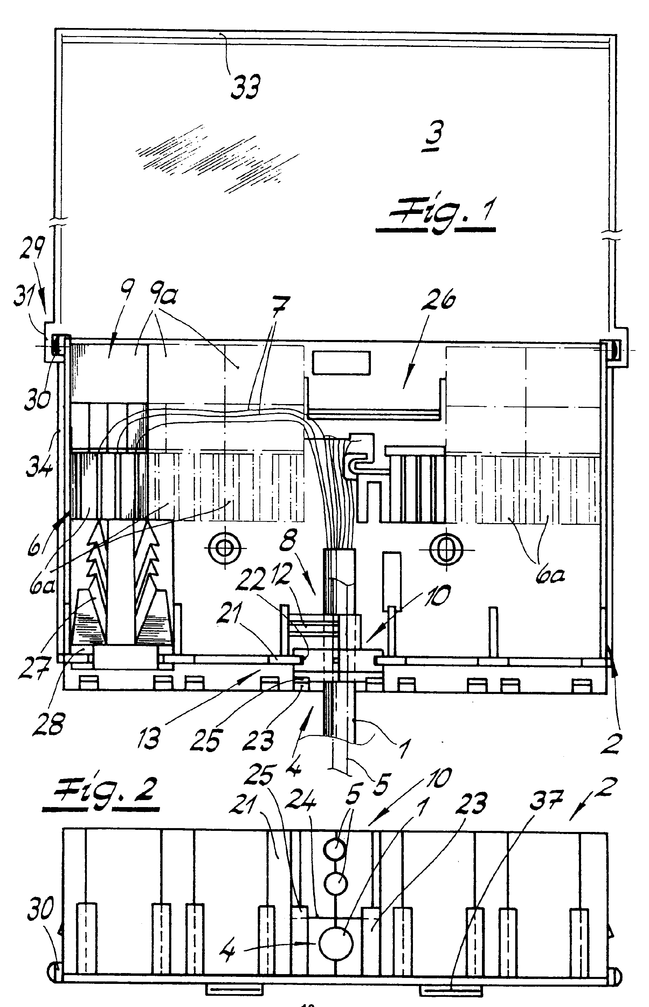

- Fig. 2: eine Ansicht von unten auf den Gegenstand nach Fig. 1,

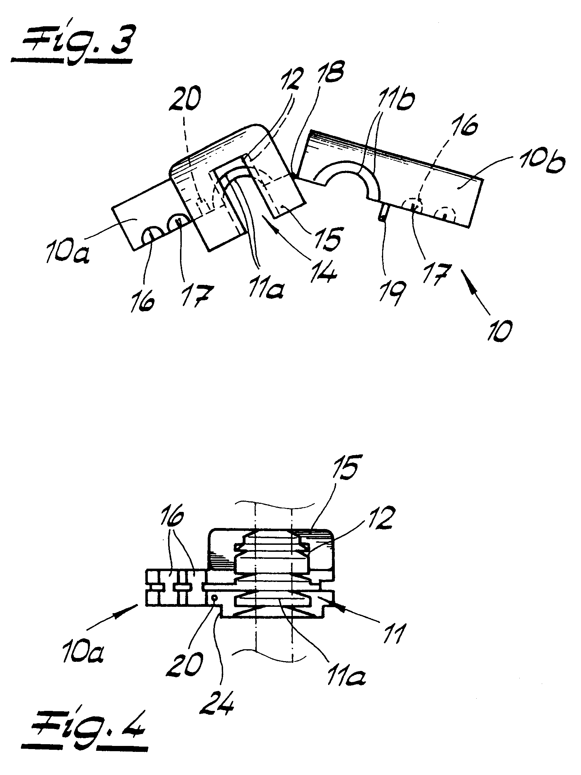

- Fig. 3: eine Dicht/Klemmeinheit mit aufgeklappten Dicht/Klemmbacken für den Gegenstand nach Fig. 1,

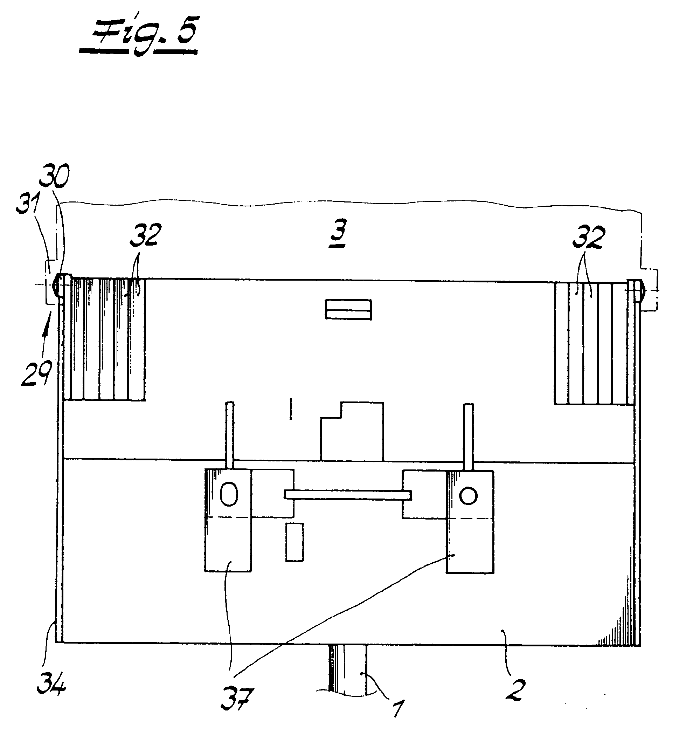

- Fig. 4: eine Hälfte des Gegenstandes nach Fig. 3 in Seitenansicht,

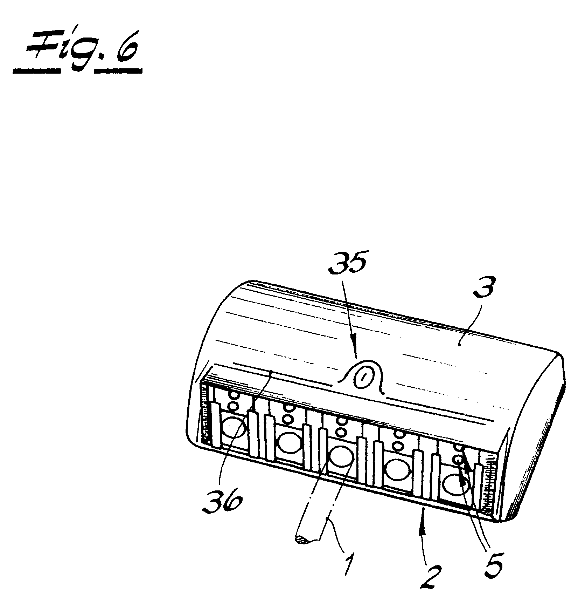

- Fig. 5: die Rückseite des Gegenstandes nach Fig. 1 und
- Fig. 6: den Gegenstand nach Fig. 1 bei geschlossener Abdeckhaube in perspektivischer Darstellung.

In den Figuren ist eine Vorrichtung zum Verbinden und Abzweigen von Installationskabeln dargestellt, und zwar in der Ausführungsform eines Endverzweigers für Fernmeldekabel 1. Im Rahmen der Erfindung kann es sich aber auch um eine Verbindungs- und Verteilungsdose handeln. Der Endverzweiger weist in seinem grundsätzlichen Aufbau ein Gehäuse aus einem Gehäuseunterteil 2 und einer Abdeckhaube 3 auf, wobei im Bodenbereich des Gehäuseunterteils 2 Kabeleinführungen 4 ankommende und abgehende Kabel 1, 5 angeordnet sind. Ferner sind eine oder mehrere Anschlußleisten 6 in Schneidklemm-Technik für die Kabeladern 7 der Kabel 1 vorgesehen. Eine außerdem erforderliche Erdungseinrichtung ist nicht gezeigt, dagegen eine Zugentlastung 8 für die Kabel 1 und ein Überspannungsableitermagazin 9.

Die Kabeleinführungen 4 weisen für zumindest die ankommenden Kabel 1 jeweils zwei zum Einlegen eines Kabels 1 aufklappbare Dicht/Klemmbacken 10a, 10b mit in Kabellängsrichtung hintereinander angeordneten Dichtungshälften 11a, 11b und Klemmen 12 auf. Die beiden zusammengeklappten Dicht/Klemmbacken 10a, 10b sind unter Bildung einer Dicht/Klemmeinheit 10 mit zumindest einer Dichtung 11 und einer Klemme 12 für das betreffende Kabel 1 in eine Halterung 13 am Gehäuseunterteil 2 einsteckbar. Jede Dicht/Klemmeinheit 10 weist mehrere in Kabellängsrichtung hintereinander angeordnete Dichtungen 11 und Klemmen 12 für Kabel 1 unterschiedlicher Durchmesser auf. Die Klemmen 12 befinden sich an lediglich einer der beiden Dicht/Klemmbacken 10a und weisen jeweils einen auf der Seite der anderen Dicht/Klemmbacke 10b offenen Kabeldurchtrittsspalt 14 mit einer beim seitlichen Eindrücken des betreffenden Kabels 1 überfahrbaren Arretierungsnase 15 auf. Die Dichtungen 11 sind als Ringdichtungen mit abgestuften Innendurchmessern ausgebildet, während die Klemmen 12 praktisch von Klemmleisten gebildet sind, jedenfalls Kabeldurchtrittsspalte 14 mit abgestuften Spaltbreiten bilden. Die Dichtungen 11 und die Klemmen 12 weisen einen schneidenartigen Querschnitt auf, wobei die Dichtungen 11 aus biegeweichem Kunststoff und die Klemmen 12 aus biegesteifem Kunststoff bestehen. Die aufklappbaren Dicht/Klemmbacken 10a, 10b besitzen ferner hälftige Kabeldurchtrittsöffnungen 16 mit geschlitzten Dichthäuten 17 zum Einlegen von abgehenden Kabeln 5. Die beiden Dicht/Klemmbacken 10a, 10b jeder Dicht/Klemmeinheit 10 sind über ein Filmscharnier 18 miteinander verbunden und weisen Zentrierzapfen und -bohrungen 19, 20 auf, die bei zusammengeklappten Dicht/Klemmbacken 10a, 10b ineinandergreifen.

Die Halterungen 13 für die Dicht/Klemmeinheiten 10 weisen fachbildende Einsteckleisten 21 am Gehäuseunterteil 2 auf. Die Dicht/Klemmeinheiten 10 sind zwischen den Einsteckleisten 21 in die Fächer einsteckbar und bilden mit den jeweils beidseitigen Einsteckleisten 21 Nut/Federverbindungen 22. Den Fächern sind Arretierungsstege 23 mit eine Schulter 24 an den Dicht/Klemmeinheiten 10 rastsitzartig übergreifenden Arretierungshaken 25 zugeordnet.

Die gezeigte Anschlußleiste 6 und das Überspannungsableitermaganzin 9 sind quer zur Kabeleinführungsrichtung und folglich waagerecht angeordnet sowie in Modulbauweise aus bausteinartigen Blöcken 6a, 9a wahlweise zusammensetzbar. Das Überspannungsableitermagazin 9 ist an die Anschlußleiste 6 anreihbar. Die Anschlußleiste 6 ist unter Bildung einer mittigen Kabeladerdurchführung 26 aus mehreren Blöcken 6a zusammengesetzt, so daß praktisch eine geteilte bzw. zwei Anschlußleisten entstehen. Statt der Dicht/Klemmeinheit kann zwischen den Kabeleinführungen 4 und der Anschlußleiste 6 die Zugabfangung der Kabel über einstückig mit dem Gehäuse verbundene Klemmbereiche (Kabelklemmen) 27 nach Art von Tauklampen für die ankommenden Kabel 1 als Zugentlastung angeordnet sein, was in einem Fall lediglich angedeutet ist.

Das gilt auch für die Maßnahme, im Bereich der Kabelklemmen 27 gegeneinander wirkende Dichtungsplatten 28 aus dauerplastischer Dichtmasse an einerseits dem Gehäuseunterteil 2 und andererseits der Abdeckhaube 3 vorzusehen, um eine Abdichtung gegen das bzw. die ankommenden Kabel 1 zu erreichen.

Die Abdeckhaube 3 ist auf der den Kabeleinführungen 4 gegenüberliegenden Seite an dem Gehäuseunterteil 2 schwenkbar gelagert. Die Schwenklager 29 zwischen dem Gehäuseunterteil 2 und der Abdeckhaube 3 sind als Rastlager aus Lagerzapfen 30 und Zapfenaufnahme 31 ausgebildet. Das Gehäuseunterteil 2 weist rückwandseitig im Bereich der Rastlager bzw. Schwenklager 29 auseinanderspreizbare bzw. zusammendrückbare Faltenwandabschnitte 32 auf, damit die Lagerzapfen 30 beim Aufrasten der biegesteifen Abdeckhaube 3 ausweichen und in Rastsitzstellung zurückspringen können. Die Abdeckhaube 3 übergreift das Gehäuseunterteil 2, welches einen niedrigen Rand 33 und im übergriffenen Bereich eine mit der Abdeckhaube 3 zusammenwirkende Dichtung 34, z. B. abgespreizte Lippendichtung aufweist. Die Abdeckhaube 3 besitzt einen mittigen mit dem Gehäuseunterteil zusammenwirkenden Rastverschluß, der nicht gezeigt ist. Dargestellt ist dagegen ein auf der Vorderseite der Abdeckhaube 3 angeordnetes Schloß 35, welches mit dem Gehäuseunterteil 2 bzw. einem Schloßteil am Gehäuseunterteil zusammenwirkt und eine Tropfkante 36 aufweist. Das Gehäuse besitzt rückwandseitig Montagehaken 37 zum Anschluß für Spannbänder.

## Patentansprüche

1. Vorrichtung zum Verbinden und Abzweigen von Installationskabeln, insbesondere Endverzweiger, Verbindungsdose, Verteilungsdose o. dgl. für Fernmeidekabel, mit einem Gehäuse aus Gehäuseunterteil (2) und Abdeckhaube (3), mit im Bodenbereich des Gehäuseunterteils (2) angeordneten Kabeleinführungen (4) für ankommende und abgehende Kabel (1,5), mit zumindest einer Anschlußleiste (6) für die Kabeladern (7) der Kabel, einer Erdungseinrichtung, einer Zugentlastung (8) und gegebenenfalls einem Überspannungsableitermagazin (9), **dadurch gekennzeichnet,** daß die Kabeleinführungen (4) für zumindest die ankommenden Kabel (1) jeweils zwei zum Einlegen eines Kabels (1) aufklappbare Dicht/Klemmbacken (10a, 10b) mit in Kabellängsrichtung hintereinander angeordneten Dichtungshälften (11a, 11b) und Klemmen (12) aufweisen, und daß die beiden zusammengeklappten Dicht/Klemmbacken (10a, 10b) unter Bildung einer Dicht/Klemmeinheit (10) mit zumindest einer Dichtung (11) und einer Klemme (12) für das Kabel (1) in einer Halterung (13) am Gehäuseunterteil (2) von vorne einsteckbar sind.

2. Vorrichtung nach Anspruch 1, dadurch gekennzeichnet, daß jede Dicht/Klemmeinheit (10) mehrere in Kabellängsrichtung hineinander angeordnete Dichtungen (11) und Klemmen (12) für Kabel (1) unterschiedlicher Durchmesser aufweist.

3. Vorrichtung nach Anspruch 1 oder 2, dadurch gekennzeichnet, daß sich die Klemmen (12) an lediglich einer der beiden Dicht/Klemmbacken (10a) befinden und jeweils einen auf der Seite der anderen Dicht/Klemmbacke (10b) offenen Klemmdurchtrittsspalt (14) mit einer beim seitlichen Eindrücken des betreffenden Kabels (1) überfahrbaren Arretierungsnase (15) aufweisen.

4. Vorrichtung nach einem der Ansprüche 1 bis 3, dadurch gekennzeichnet, daß die Dichtungen (11) als Ringdichtungen mit abgestuften Innendurchmessern ausgebildet sind und die Klemmen (12) Kabeldurchtrittsspalte (14) mit abgestuften Spaltbreiten bilden.

5. Vorrichtung nach einem der Ansprüche 1 bis 4, dadurch gekennzeichnet, daß die Dichtungen (11) und die Klemmen (12) einen schneidenartigen Querschnitt aufweist, wobei die Dichtungen (11) aus biegeweichem Material und die Klemmen (12) aus biegesteifem Material bestehen.

6. Vorrichtung nach einem der Ansprüche 1 bis 5, dadurch gekennzeichnet, daß die aufklappbaren Dicht/Klemmbacken (10a, 10b) hälftige Kabeldurchtrittsöffnungen (16) mit geschlitzten Dichthäuten (17) zum Einlegen von abgehenden Kabeln (5) aufweisen.

7. Vorrichtung nach einem der Ansprüche 1 bis 6, dadurch gekennzeichnet, daß jeweils die beiden Dicht/Klemmbacken (10a, 10b) über ein Filmscharnier (18) miteinander verbunden sind und ineinandergreifende Zentrierzapfen und -bohrungen (19, 20) aufweisen.

8. Vorrichtung nach einem der Ansprüche 1 bis 7, dadurch gekennzeichnet, daß die Halterungen (13) für die Dicht/Klemmeinheiten (10) fachbildende Einsteckleisten (21) am Gehäuseunterteil (2) aufweisen und die Dicht/Klemmeinheiten (10) zwischen den Einsteckleisten (21) in die Fächer einsteckbar sind und mit den jeweils beidseitigen Einsteckleisten Nut/Federverbindungen (22) bilden.

9. Vorrichtung nach einem der Ansprüche 1 bis 8, dadurch gekennzeichnet, daß den Fächern Arretierungsstege (23) mit eine Schulter (24) an den Dicht/Klemmeinheiten (10) rastsitzartig übergreifende Arretierungshaken (25) zugeordnet sind.

10. Vorrichtung nach einem der Ansprüche 1 bis 9, dadurch gekennzeichnet, daß die Anschlußleiste (6) und gegebenenfalls das Überspannungsableitermagazin (9) quer zur Kabeleinführungseinrichtung angeordnet und in Modulbauweise aus Blöcken (6a bzw. 9a) wahlweise zusammensetzbar sind.

11. Vorrichtung nach einem der Ansprüche 1 bis 10, dadurch gekennzeichnet, daß das Überspannungsableitermagazin (9) an die Anschlußleiste (6) anreihbar ist.

12. Vorrichtung nach einem der Ansprüche 1 bis 11, dadurch gekennzeichnet, daß die Anschlußleiste (6) unter Bildung einer mittigen Kabeladerdurchführung (26) aus mehreren Blöcken (6a) zusammengesetzt ist.

13. Vorrichtung nach einem der Ansprüche 1 bis 12, dadurch gekennzeichnet, daß zwischen den Kabeleinführungen (4) und der Anschlußleiste (6) Kabelklemmen (27) als Zugentlastung für die Kabel (1) angeordnet bzw. einstückig mitgespritzt sind.

14. Vorrichtung nach einem der Ansprüche 1 bis 13, dadurch gekennzeichnet, daß im Bereich der Kabelklemmen (27) gegeneinander wirkende Dichtungsplatten (28) aus dauerplastischer Dichtmasse an einerseits dem Gehäuseunterteil (2) und anderseits der Abdeckhaube (3) vorgesehen sind.

15. Vorrichtung nach einem der Ansprüche 1 bis 14, dadurch gekennzeichnet, daß die Abdeckhaube (3) auf der den Kabeleinführungen (4) gegenüberliegenden Seite an dem Gehäuseunterteil schwenkbar gelagert ist.

16. Vorrichtung nach einem der Ansprüche 1 bis 15, dadurch gekennzeichnet, daß die Schwenklager (29) zwischen dem Gehäuseunterteil (2) und der Abdeckhaube (3) als Rastlager ausgebildet sind und das Gehäuseunterteil (2) rückwandseitig im Bereich der Rastlager auseinanderspreizbare bzw. zusammendrückbare Faltenwandabschnitte (32) aufweist.

17. Vorrichtung nach einem der Ansprüche 1 bis 16, dadurch gekennzeichnet, daß die Abdeckhaube (3) das Gehäuseunterteil (2) übergreift und das Gehäuseunterteil (2) im übergriffenen Bereich eine mit der Abdeckhaube (3) zusammenwirkende Dichtung (34), z. B. Lippendichtung aufweist.

18. Vorrichtung nach einem der Ansprüche 1 bis 17, dadurch gekennzeichnet, daß die Abdeckhaube (3) einen mittigen mit dem Gehäuseunterteil (2) zusammenwirkenden Rastverschluß aufweist.

19. Vorrichtung nach einem der Ansprüche 1 bis 18, dadurch gekennzeichnet, daß die Abdeckhaube (3) auf ihrer Vorderseite ein mit dem Gehäuseunterteil (2) zusammenwirkendes Schloß (35) mit Tropfkante (36) aufweist.

20. Vorrichtung nach einem der Ansprüche 1 bis 19, dadurch gekennzeichnet, daß das Gehäuse auf seiner Rückseite Montagehaken (37) aufweist.

## Claims

1. A device for connecting and branching cables, particularly an end junction, junction box, distribution box or the like for communications cables, with a housing made of a lower housing part (2) and a cover (3), with cable inlets (4) arranged in the base region of the lower housing part (2) for incoming and outgoing cables (1, 5), with at least one terminal strip (6) for the cable conductors (7) of the cables, an earthing device, a strain relief (8) and if necessary a surge diverter store (9), characterised in that the cable inlets (4) for at least the incoming cables (1) in each case have two hinged sealing/clamping jaws (10a, 10b) with sealing halves (11a, 11b) and clamps (12) arranged behind each other in the direction along the cable, and that the two closed sealing/clamping jaws (10a, 10b) can be inserted from the front in a support (13) on the housing lower part (2), forming a sealing/clamping unit (10) with at least one seal (11) and one clamp (12) for the cable (1).

2. A device according to claim 1, characterised in that each sealing/clamping unit (10) has several seals (11) and clamps (12) arranged behind each other in the direction along the cable for cables (1) of different diameters.

3. A device according to claim 1 or 2, characterised in that the clamps (12) are located solely on one of the two sealing/clamping jaws (10a) and in each case have a clamping passage gap (14) open on the side of the other sealing/ clamping jaw (10b) with a catch (15) which can be passed over during lateral flattening of the relevant cable (1).

4. A device according to one of claims 1 to 3, characterised in that the seals (11) are constructed as annular seals with stepped internal diameters and the clamps (12) form cable passage gaps (14) with stepped gap widths.

5. A device according to one of claims 1 to 4, characterised in that the seals (11) and the clamps (12) have an intersecting cross-section, in which the seals (11) consist of pliable material and the clamps (12) of stiff material.

6. A device according to one of claims 1 to 5, characterised in that the hinged sealing/clamping jaws (10a, 10b) have halved cable passage openings (16) with slotted sealing films (17) for inserting outgoing cables (5).

7. A device according to one of claims 1 to 6, characterised in that in each case the two sealing/clamping jaws (10a, 10b) are connected to each other via a film hinge (18) and have interengaging centering pins and bores (19, 20).

8. A device according to one of claims 1 to 7, characterised in that the supports (13) for the sealing/clamping units (10) have insertion strips (21) forming compartments on the lower housing part (2) and the sealing/clamping units (10) can be inserted into the compartments between the insertion strips (21) and form key-seat and featherkey connections (22) with the respective insertion strips on both sides.

9. A device according to one of claims 1 to 8, characterised in that locking cross-pieces (23) with a shoulder (24) on locking hooks (25) overlapping the sealing/clamping units (10) in a catch-seating manner are associated with the compartments.

10. A device according to one of claims 1 to 9, characterised in that the terminal strip (6) and if necessary the surge diverter store (9) are arranged transversely to the cable inlet device and can optionally be assembled in modular fashion from blocks (6a, 9a respectively).

11. A device according to one of claims 1 to 10, characterised in that the surge diverter store (9) can be attached to the terminal strip (6).

12. A device according to one of claims 1 to 11, characterised in that the terminal strip (6) forming a concentric cable conductor bushing (26), is assembled from several blocks (6a).

13. A device according to one of claims 1 to 12, characterised in that between the cable inlets (4) and the terminal strip (6) cable clamps (27) are arranged or integrally moulded as a strain relief for the cable (1).

14. A device according to one of claims 1 to 13, characterised in that in the region of the cable clamps (27), sealing plates (28) of durable plastic sealing material, acting against each other, are provided, on the one hand, on the lower housing part (2) and, on the other hand, on the cover (3).

15. A device according to one of claims 1 to 14, characterised in that the cover (3) is pivotally mounted on the lower housing part on the side opposite the cable inlets (4).

16. A device according to one of claims 1 to 15, characterised in that the pivotal bearing (29) between the lower housing part (2) and the cover (3) is constructed as a catch bearing and the lower housing part (2) has folding wall sections (32) on the rear wall side in the region of the catch bearing, which sections can be forced apart from each other or pressed together.

17. A device according to one of claims 1 to 16, characterised in that the cover (3) overlaps the lower housing part (2) and the lower housing part (2) has a seal (34), e.g a lip seal, cooperating with the cover (3) in the overlap region.

18. A device according to one of claims 1 to 17, characterised in that the cover (3) has a concentric catch closure cooperating with the lower housing part (2), with a beaded edge (36).

19. A device according to one of claims 1 to 18, characterised in that the cover (3) has on its front side a lock (35) cooperating with the lower housing part (2), with a beaded edge (36).

20. A device according to one of claims 1 to 19, characterised in that the housing has on his backside mounting hooks (37).

## Revendications

1. Dispositif de raccordement et de dérivation de câbles d'installation, en particulier distributeur terminal, boîte de jonction, boîte de distribution ou similaire pour câble de télécommunication, comportant un boîtier fait d'une partie inférieure (2) de boîtier et d'un capot de fermeture (3), comportant des entrées de câble (4) disposées dans la zone du fond de la partie inférieure (2) de boîtier pour les arrivées et les départs de câbles (1, 5), comportant au moins une barrette de raccordement (6) pour les brins (7) des câbles, un dispositif de mise à la terre, une décharge de traction (8) et éventuellement un magasin d'éclateurs (9), caractérisé en ce que les entrées de câble (4) pour au moins les arrivées de câble (1) comportent chacune deux mâchoires d'étanchéité/serrage (10a, 10b) aptes à s'ouvrir pour l'insertion d'un câble (1) avec des moitiés d'étanchéité (11a, 11b) et des pinces (12) disposées les unes derrière les autres dans le sens de la longueur du câble et en ce que les deux mâchoires d'étanchéité/serrage (10a, 10b) assemblées par fermeture peuvent être introduites par l'avant dans une fixation (13) sur la partie inférieure (2) du boîtier, en formant une unité d'étanchéité/serrage (10) avec au moins un joint d'étanchéité (11) et une pince (12) pour le câble (1).

2. Dispositif selon la revendication 1, caractérisé en ce que chaque unité d'étanchéité/serrage (10) comporte plusieurs joints d'étanchéité (11) et pinces (12) pour câbles (1) de diamètre différent, disposés les unes derrière les autres selon la direction longitudinale du câble.

3. Dispositif selon les revendications 1 ou 2, caractérisé en ce que les pinces (12) se trouvent sur l'une seulement des deux mâchoires d'étanchéité/serrage (10a) et présentent chacune une fente de passage de pincement (14) ouverte sur le côté de l'autre mâchoire d'étanchéité/serrage (10b) avec un relief d'arrêt (15) sur lequel on peut passer lorsqu'on met en place par poussée latérale de câble (1) concerné.

4. Dispositif selon l'une des revendications 1 à 3, caractérisé en ce que les joints d'étanchéité (11) sont des joints annulaires avec diamètres intérieurs étagés et les pinces (12) forment des fentes de passage de câble (14) avec des largeurs de fente étagées.

5. Dispositif selon l'une des revendications 1 à 4, caractérisé en ce que les joints d'étanchéité (11) et les pinces (12) présentent une section transversale en conformation de tranchant, les joints d'étanchéité (11) étant réalisés dans un matériau souple en flexion et les pinces (12) dans un matériau rigide en flexion.

6. Dispositif selon l'une des revendications 1 à 5, caractérisé en ce que les mâchoires d'étanchéité/serrage (10a, 10b) aptes à s'ouvrir présentent des demi-ouvertures de passage de câble (16) avec des peaux ou films d'étanchéité (17) fendues pour l'insertion de départs de câble (5).

7. Dispositif selon l'une des revendications 1 à 8, caractérisé en ce que les deux mâchoires d'étanchéité/serrage (10a, 10b) sont reliées entre elles par une charnière en film (18) et présentent des doigts et des trous de centrage (19, 20) s'engageant les uns dans les autres.

8. Dispositif selon l'une des revendications 1 à 7, caractéisé en ce que les fixations (13) des unités d'étanchéité/serrage (10) présentent des barrettes d'introduction (21) formant des cases sur la partie inférieure (2) du boîtier et les unités d'étanchéité/serrage (10) peuvent être introduites dans les cases entre les barrettes d'introduction (21) et forment des assemblages à rainure et languette (22) avec les barrettes d'introduction, des deux côtés.

9. Dispositif selon l'une des revendications 1 à 8, caractérisé en ce qu'aux cases sont associées des nervures d'arrêt (23) avec des crochets d'arrêt (25) passant sur un épaulement (24) des unités d'étanchéité/serrage (10) par encliquetage.

10. Dispositif selon l'une des revendications 1 à 9, caractérisé en ce que la barrette de raccordement (6) et éventuellement le magasin d'éclateurs (9) sont disposés transversalement à la direction d'introduction du câble et peuvent être constitués de blocs (6a ou 9a) assemblés au choix de manière modulaire.

11. Dispositif selon l'une des revendications 1 à 10, caractérisé en ce que le magasin d'éclateurs (9) peut être raccordé à la barrette de raccordement (6).

12. Dispositif selon l'une des revendications 1 à 11, caractérisé en ce que la barrette de raccordement (6) est constituée de plusieurs blocs (6a) assemblés, en formant un passage de fils de câbles (26) central.

13. Dispositif selon l'une des revendications 1 à 12, caractérisé en ce qu'entre les entrées de câble (4) et la barrette de raccordement (6) sont prévus ou injectés d'un seul tenant des serre-câbles (27) servant de décharge de traction pour le câble (1).

14. Dispositif selon l'une des revendications 1 à 13, caractérisé en ce que dans la zone des serre-câbles (27) sont prévues des plaques d'étanchéité (28) agissant l'une contre l'autre, faites d'une masse d'étanchéité duroplastique d'une part sur la partie inférieure (2) de boîtier et d'autre part sur le capot de fermeture (3).

15. Dispositif selon l'une des revendications 1 à 14, caractérisé en ce que le capot de couverture (3) est monté pivotant sur la partie inférieure de boîtier, du côté opposé aux entrées de câble (4).

16. Dispositif selon l'une des revendications 1 à 15, caractérisé en ce que les paliers pivotants (29) sont réalisés sous la forme de paliers à encliquetage, entre la partie inférieure (2) de boîtier et le capot de fermeture (3), et en ce que la partie inférieure (2) du boîtier présente sur la partie arrière, dans la zone des paliers à encliquetage, des portions de paroi plissées (32) pouvant être écartées ou pressées ensemble.

17. Dispositif selon l'une des revendications 1 à 16, caractérisé en ce que le capot de fermeture (3) passe sur la partie inférieure (2) du boîtier et la partie inférieure (2) du boîtier présente dans la zone concernée, un joint d'étanchéité (34), par exemple à lèvres, coopérant avec le capot de fermeture (3).

18. Dispositif selon l'une des revendications 1 à 18, caractérisé en ce que le capot de fermeture (3) présente une fermeture à encliquetage centrale coopérant avec la partie inférieure (2) du boîtier.

19. Dispositif selon l'une des revendications 1 à 18, caractérisé en ce que le capot de fermeture (3) présente sur sa face avant une serrure (35) avec bord d'égouttage (36) coopérant avec la partie inférieure (2) de boîtier.

20. Dispositif selon l'une des revendications 1 à 19, caractérisé en ce que le boîtier présente sur sa face arrière des crochets de montage (37).
